Europäisches Patentamt

European Patent Office

Office européen des brevets

(11) Veröffentlichungsnummer : **0 119 512**
**B1**

(12) **EUROPÄISCHE PATENTSCHRIFT**

(45) Veröffentlichungstag der Patentschrift :
06.07.88

(21) Anmeldenummer : 84101900.3

(22) Anmeldetag : 23.02.84

(51) Int. Cl.⁴ : **G 01 N 30/00**

(54) Verfahren zur Bestimmung der 3H-Konzentration von Luftfeuchte.

(30) Priorität : 19.03.83 DE 3310041

(43) Veröffentlichungstag der Anmeldung :
26.09.84 Patentblatt 84/39

(45) Bekanntmachung des Hinweises auf die Patenterteilung : 06.07.88 Patentblatt 88/27

(84) Benannte Vertragsstaaten :
BE CH FR GB LI NL SE

(56) Entgegenhaltungen :
EP-A- 0 036 961
GB-A- 1 449 717
ATOMWIRTSCHAFT, März 1977; H. GEBAUER et al. "Messtechnische Erfassung radioaktiver Ableitungen aus Kernkraftwerken", Seiten 149-153
CHEMICAL ABSTRACTS, Band 76, Nr. 22, 29. Mai 1972, Columbus, Ohio, USA; R. AUNE et al. "Complete control of tritium water vapor by the use of silica gel", Seite 567, Spalte 1, Zusammenfassung Nr. 134656w & Report, 1971, LBL-2; Nuclear Science Abstracts, Band 26, Nr. 1, 1972, Seite 296
CHEMICAL ABSTRACTS, Band 98, Nr. 6, 7. Februar 1983, Columbus, Ohio, USA; F. ONO et al. "Desorption rate of adsorbed tritiated water from molecular sieve 5A by exchange with environmental water vapor", Seite 490, Spalte 1, Zusammenfassung Nr. 42572s & Journal of Nuclear Science Technology, Band 19, Nr. 12, 1982, Seiten 1015-1018

(73) Patentinhaber : **Kernforschungszentrum Karlsruhe GmbH**
**Weberstrasse 5 Postfach 3640**
**D-7500 Karlsruhe 1 (DE)**

(72) Erfinder : **Weber, Hans Werner**
**Humboldtstrasse 14**
**D-7500 Karlsruhe (DE)**
Erfinder : **Schüttelkopf, Heinz, Dr.**
**Leopoldstrasse 120**
**D-7514 Eggenstein (DE)**

**Beschreibung**

Die Erfindung betrifft ein Verfahren zur Bestimmung der $^3$H-Konzentration von Luftfeuchte, bei dem die Luftfeuchte in einem Trockenmittel adsorbiert und die Tritiumaktivitätskonzentration gemessen wird.

Zur kontinuierlichen Tritium-in-Luft-Überwachung verwendet man vorwiegend Durchflußproportionaldetektoren oder Durchflußionisationskammern. Bedingt durch die geringe Energie der Betastrahlung ist die Einleitung des Zählgas-Luftgemisches in das Innere eines empfindlichen Detektors notwendig. Neuere Konstruktionen von Durchflußproportionaldetektoren erlauben unter Verwendung einer Antikoinzidenz-Koinzidenz-Schaltung die gleichzeitige Messung von Edelgasen und Tritium. Der Meßbereich von handelsüblichen Monitoren zur kontinuierlichen Tritium-in-Luft-Überwachung liegt bei $3{,}7 \cdot 10^2$ bis $3{,}7 \cdot 10^8$ Bq $\cdot$ m$^{-3}$.

Meßtechnische Nachteile von Tritium-Monitoren sind Kontaminationen durch Fremdnuklide und $^3$HHO (Memory-Effekt) und die Vortäuschung von Tritium durch andere radioaktive Gase (FS-82-27-T, H. Brunner, EIR, (1981), S. 301-305).

Eine übliche Methode sieht die Abscheidung der Luftfeuchte aus dem Meßluftstrom durch Abkühlen der Luft unter den Taupunkt vor. Aus der spezifischen Aktivität des auskondensierten $^3$HHO/H$_2$O-Gemisches läßt sich bei bekannter absoluter Luftfeuchte der Fortluft und bei konstanter Tritiumkonzentration der Luftfeuchte die Tritiumaktivitätskonzentration der Fortluft berechnen (Atompraxis 10, 1967, S. 454-457).

Die Messung der spezifischen Aktivität des destillativ gereinigten Kondensats erfolgt dann üblicherweise mit dem Flüssigszintillationsverfahren. Die Nachweisgrenze liegt bei etwa $3{,}7$ Bq $\cdot$ m$^{-3}$ Luft bei einer Meßzeit von 10 Minuten und einer absoluten Luftfeuchte von 11 g $\cdot$ m$^{-3}$. Probleme ergeben sich durch

— den Isotopenaustausch zwischen Meßluft und Kondensat,
— Rückverdampfungen,
— Schwankungen der absoluten Luftfeuchte und
— Schwankungen der Tritiumkonzentration der Luftfeuchte.

Ist die Taupunkttemperatur der Meßluft niedriger als die Kühltemperatur, fällt kein Kondensat mehr an. Bei Kühltemperaturen unter 0 °C ergeben sich Probleme durch Eisbildung und Verstopfungen. Eine vollständige quantitative oder konstante prozentuale Abscheidung der Luftfeuchte ist daher nicht möglich.

Bei einer weiteren Methode wird die Meßluft durch ein Wasserbad geleitet, wobei ein Isotopenaustausch zwischen der durchgeleiteten tritiumhaltigen Luftfeuchte und dem Auffangwasser erfolgt. Ein Teil des Wassers verdunstet während dem Durchleiten. Das Auffangwasser wird im Flüssigszintillationsspektrometer gemessen. Es wird ein Zusammenhang zwischen der Tritiumkonzentration der Luftfeuchte und der Tritiumkonzentration des Auffangwassers hergestellt (Atomwirtschaft, Sept./Okt. 1976, S. 485-488). Probleme ergeben sich durch

— Schwankungen der Luftfeuchte,
— Schwankungen der Temperatur und
— Schwankungen des Tritiumgehaltes der Luftfeuchte.

Der Meßluft kann aber auch durch hygroskopische Stoffe die Luftfeuchte entzogen werden. Es gibt mehrere Trockenmittelverfahren zur Messung der Tritiumkonzentration der Luftfeuchte mit :

— Schwefelsäure
— Kieselgel (Silica-Gel)
— Äthylenglykol
— Molekularsiebe

Die Art der Probenvorbereitung hängt jedoch von der Art des Trockenmittels ab. Bei der Verwendung von Schwefelsäure ist eine chemische Aufarbeitung notwendig. Äthylenglykol wird als Teil des Szintillatorcocktails verwendet. Das Kieselgel und die Molekularsiebe müssen erhitzt und dann das Kondensat gemessen werden.

Probleme treten hierbei auf, weil

— die Verwendung flüssiger Adsorptionsmittel aus Sicherheitsgründen ungünstig und die Handhabung unpraktisch ist
— die thermische Rückgewinnung des adsorbierten Wassers aus den festen Adsorbern zeitlich und apparativ aufwendig ist.

Die der Erfindung gestellte Aufgabe besteht nunmehr darin, ein Verfahren anzugeben, das für ein Routinemeßverfahren mit einem geeigneten Trockenmittel geeignet ist und die Messung einer Teilmenge des Wassers im Flüssigszintillationsspektrometer ermöglicht, wobei das geeignete Trockenmittel folgende Eigenschaften besitzen soll :

— Sicher handhabbarer Feststoff der seine Rieselfähigkeit nach der Adsorption behält.
— Hohe Aufnahmekapazität für Wasser.
— Quantitative Adsorption der Luftfeuchte bei möglichen Schwankungen der Temperatur, der relativen Luftfeuchte und des Volumenstromes der Meßluft.
— Keine chemischen Reaktionen nach der Zugabe des Trockenmittels zum Wasser.

— Der durch das Trockenmittel im Meßgut verursachte Quencheffekt bei der Messung im Flüssigszintillationsspektrometer soll vernachlässigbar klein sein.

— Praktikable Dimensionierung einer Sammelstelle.

— Genügend niedrige Nachweisgrenze für $^3$H.

— Niedrige Investitions- und Betriebskosten.

Die Lösung ist in den Merkmalen des Anspruchs 1 beschrieben. Die übrigen Ansprüche geben vorteilhafte Verwendungs- und Anwendungsmöglichkeiten des erfindungsgemäßen Verfahrens wieder.

Die besonderen Vorteile der Erfindung bestehen in folgendem :

— Die z. B. in kerntechnischen Anlagen auftretenden Abluftabgaben in der Größenordnung von $10^9$ m$^3$/a können bei einem Nachweis von 1 Ci bei konstanter Abgaberate mit einer Nachweisgrenze von $10^{-9}$ Ci/m$^3$ Luft gemessen werden, was mit kontinuierlich messenden Methoden nicht möglich ist, wenn außerdem noch die Anwesenheit radioaktiver Edelgase störend hinzukommt.

— Bei stark schwankenden Tritiumableitungen ist eine zuverlässige Aussage über « niedrige » $^3$H-Ableitungen in der Größenordnung von 10-100 Ci/a möglich.

— Einfacher apparativer Aufbau der Sammelstelle mit z. B. Aerosolfilter, Trockenmittelpatrone, Rotameter und Pumpe.

— Durch die hohe Schüttdichte und die gute Trocknungskapazität des Molekularsiebes ist es zur Lufttrocknung in kleindimensionierten Patronen mit 150 g Trockenmittel schon geeignet. Die Patronen sind leicht und sicher transportierbar.

— Verwendet wird ein einfach und sicher zu handhabendes festes (1/16"-Stäbchenform) Molekularsieb.

— Bei eventuellem Bruch der Patrone entsteht keine Kontaminationsgefahr und keine chemischen Reaktionen.

— Es ist möglich den Sammler netzunabhängig zu betreiben und in geeigneter Anordnung zur Umgebungsüberwachung einzusetzen. Das System ist daher potentiell zur Überwachung der Fortluft und der Umgebungsluft geeignet.

— Das Trockenmittel adsorbiert praktisch vollständig die Luftfeuchte, auch bei Schwankungen der Temperatur, der relativen Luftfeuchte und des Bypass-Volumenstromes.

— Da die Luftfeuchte praktisch vollständig adsorbiert wird, muß die absolute Luftfeuchte der Meßluft, im Gegensatz zur Kondensatmethode, nicht bekannt sein. Auch bei niedrigen oder hohen Temperaturen wird die Luftfeuchte adsorbiert.

— Nach der Zugabe des Trockenmittels zum Wasser findet ein schneller Isotopenaustausch $^3$H/$^1$H statt.

— Nach dem Absedimentieren des feinen Schlamms ist an der Oberfläche eine reine Probe zu entnehmen. Kein Quencheffekt im Meßgut ist vernachlässigbar klein.

— Die Nachweisgrenze liegt bei 1 Bq $^3$HHO/m$^3$ Luft. Gefordert sind nach KTA 1503.1 3,7 · $10^2$ Bq/m$^3$. Die Nachweisgrenze ist besser als die von Tritium-Monitoren.

— Das Molekularsieb kann, wenn gewünscht, wieder regeneriert werden (T ≈ 250 °C).

— Die Zugabe des kontaminierten Trockenmittels zum Wasser ist einfacher als die Erhitzung des Trockenmittels und Auffangen des Kondensats. Die thermische Rückgewinnung des Kondensats ist apparativ und zeitlich aufwendig.

— Anschaffungs- und Betriebskosten für eine Sammelanlage sind gering.

— Ein Molekularsieb 3 Å ist zur selektiven $^3$HHO-Sammlung geeignet. $^3$HHO ist radioökologisch bedeutender als gasförmiges Tritium ($^3$HH) oder organisch gebundenes Tritium (CH$_3$$^3$H).

— Die Probenvorbereitung im Labor ist manuell einfach und benötigt wenig Zeit. So kann die Zugabe des Trockenmittels in einen 500 ml-Erlenmeyerkolben über einen Trichter erfolgen.

— Die behördlich vorgegebenen Emissionsgrenzwerte geben Wochen- und Jahresgrenzwerte an (Abluftplan). Das Trockenmittelsystem ist für eine wöchentliche Probenahme konzipiert und erfüllt daher diese Anforderungen.

— Das System ist ausbaubar auf einen kombinierten $^3$HHO + $^{14}$CO$_2$-Sammler zur Überwachung der Tritium- und C-14 Emissionen, wobei eine Oxidationsstrecke einbaubar ist.

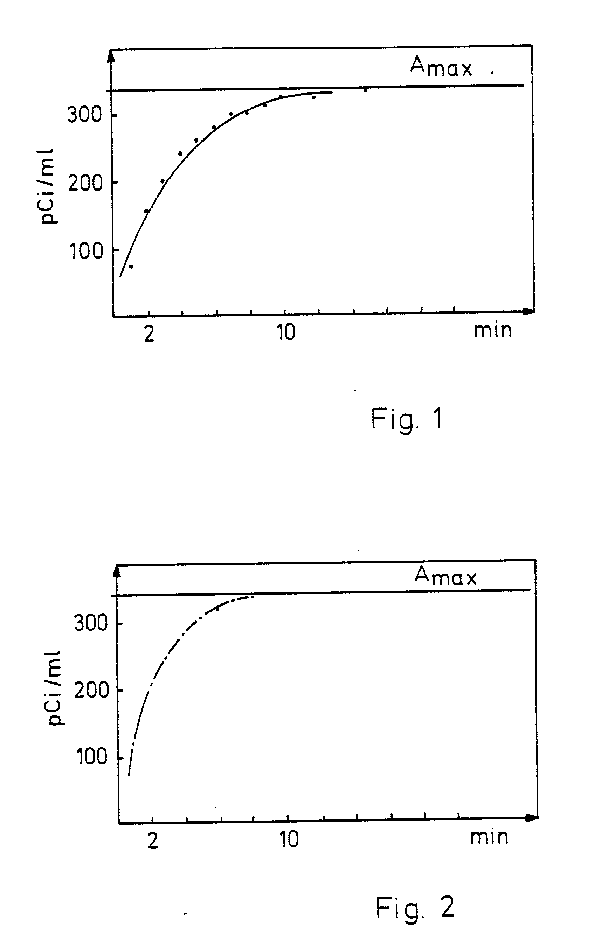

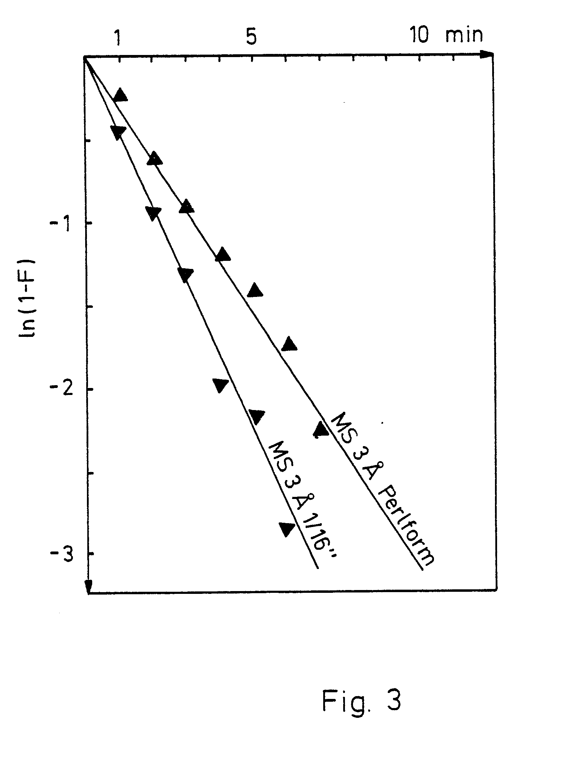

Die Erfindung wird im folgenden anhand von Ausführungsbeispielen sowie den Figuren 1 bis 3 und Tabellen I und II näher erläutert.

Bei dem erfindungsgemäßen Meßverfahren soll das mit tritiumhaltigem Wasser beladene Trockenmittel mit destilliertem Wasser in Kontakt gebracht und eine Teilmenge des Wassers nach einer bestimmten Kontaktzeit im Flüssigszintillationsspektrometer gemessen werden. Zur Berechnung der Probenaktivität ist die Kenntnis des Zählerwirkungsgrades erforderlich. Der Wirkungsgrad kann durch ungeeignete Meßbedingungen und Störungen im Szintillatorcocktail verschlechtert werden (Quencheffekt). Ein für den Meßzweck geeignetes Trockenmittel soll einen möglichst geringen Quencheffekt zeigen. In der Tabelle I sind für die Durchführung der Erfindung mehr oder weniger geeignete Trockenmittel aufgeführt.

Tabelle 1

| Trockenmittel | Kapazität nach Firmenangabe in % |
|---|---|
| Molekularsieb 3 Å, Perlform, etwa 2 mm | 20[+] |
| Molekularsieb 3 Å, Pulver | - |
| Molekularsieb 3 Å, 1/16"-Stäbchen | 20[++] |
| Molekularsieb 4 Å, Perlform, etwa 2 mm | 20[+] |
| Molekularsieb 4 Å, Pulver | 23 |
| Molekularsieb 4 Å, 1/16"-Stäbchen | 22[++] |
| Molekularsieb 4 Å, 14 x 30 mesh | 22[+++] |
| Molekularsieb 5 Å, Perlform, etwa 2 mm | 20[+] |
| Molekularsieb 5 Å, 1/16"-Stäbchen | 21,5[++] |
| Molekularsieb 5 Å, Pulver | - |
| Molekularsieb 10 Å, Perlform, etwa 2 mm | 24[+] |
| Molekularsieb 10 Å, 13X Pulver | 36[++] |
| Molekularsieb 10 Å, 13X 1/16"-Stäbchen | 28,5[++] |
| Kieselgel ohne Indikator | 27[+] |
| Aluminiumoxid 90 | 10 |

[+]Kapazität bei 80 % rel. Luftfeuchte nach Fa. Merck
[++]Kapazität des aktivierten Adsorbens bei 17,5 Torr und 25 °C nach Fa. Union Carbide (1 Torr = 1,333 · 10² Pa)

Pulverförmige Molekularsiebe sind für das erfindungsgemäße Meßverfahren weniger geeignet, da ihre Handhabung schwierig ist. Die Be- und Entladung einer Filterpatrone wird durch Staubbildung und Adsorption an den Gefäßwänden erschwert. Eine rasche Einfüllung in das Wasser ist kaum möglich, da das Pulver an der Oberfläche schwimmt; ebenso ist die Trennung des Pulver-Wasser-Gemisches umständlich.

Bei Kieselgel wurde ein geringer Quencheffekt gemessen, der zwischen 0,9 und 1 schwankte. Verursacht wird er durch einen Farbstoff, der sich aus den im Wasser platzenden Kieselgelkörnern löst. Das benutzte Kieselgel enthält keinen Feuchtigkeitsindikator.

Die Quencheffekte der Molekularsiebe lagen zwischen 0,4 und 1. Verursacht wurde der Effekt jedoch nicht durch lösliche Bestandteile, sondern durch einen durch das lange Rühren bedingten feinen schlammförmigen Abrieb, der sich nicht immer abtrennen ließ. Diesen Effekt vermeidet man einfach dadurch, in dem das Rühren unterlassen und das Mengenverhältnis Wasser : Trockenmittel auf 1,6 erhöht wird. Gibt man die stäbchenförmigen Trockenmittel erfindungsgemäß zu tritiertem Wasser und läßt das Gemisch einige Stunden stehen, so setzt sich die dabei entstandene geringe Menge an feinem Schlamm ab, und an der Wasseroberfläche kann eine saubere Probe entnommen werden. Die ³H-Messung ist nicht mehr durch Quencheffekte gestört. Eine Reinigung kann auch durch die allerdings apparativ aufwendigere Destillation erreicht werden.

Beispiel I

Nach der Zugabe des kontaminierten Trockenmittels zum Wasser findet ein rascher Isotopenaustausch ³H/¹H statt. Zur Messung und zum Beweis des Isotopenaustausches wurden je 20 g regeneriertes Trockenmittel in einen Exsikkator gegeben, in dem sich ein Schälchen mit 1 ml einer Tritiumlösung mit einer Aktivitätskonzentration von 3 kBq · ml⁻¹ befand. Nach 1 bis 2 Tagen hatte das Trockenmittel das tritiumhaltige Wasser vollständig adsorbiert. Das kontaminierte Trockenmittel wurde dann zu 250 ml destilliertem Wasser bei t = 25 ± 2 °C gegeben. Während dem Rühren mit einem Magnetrührer wurden an der Wasseroberfläche in einminütigen Abständen je 3 ml abpipettiert. Die 3-ml-Proben wurden filtriert und 1 ml davon mit einem Szintillatorcocktail auf Dioxanbasis im Spektrometer gemessen. Die Zunahme der Aktivitätskonzentration als Funktion der Zeit zeigen am Beispiel eines Molekularsiebes 3 Å (Perlen, Stäbchen) die Fig. 1 bis 3. Die Zeitabhängigkeit des Austauschgrads F läßt sich auch durch folgende Gleichung darstellen :

$$\ln (1 - F) = a \cdot t$$

$$\text{mit } F = \frac{A_{(t)}}{A_{max}} \tag{1}$$

Hierin bedeuten :

a = Konstante

t = Zeit

$A_{(t)}$ = $^3$H-Aktivitätskonzentration im Wasser zur Zeit t

$A_{max}$ = Maximale $^3$H-Aktivitätskonzentration im Wasser nach vollständigem Isotopenaustausch.

Der Verlauf der in den Fig. 1 und 2 wiedergegebenen Meßwerte der $^3$H-Konzentration im Wasser als Funktion der Zeit bestätigt die Anwendbarkeit der oben angegebenen allgemeinen Formel für den homogenen Isotopenaustausch. Auch bei veränderten Mengenverhältnissen von Wasser und Trokkenmittel dürfte der Austauschprozeß nach ca. der gleichen Zeit abgeschlossen sein.

Es wurde experimentell festgestellt, daß

— die Adsorptionskapazität des Molekularsiebes im betrachteten Temperaturbereich 30 bis 50 °C unwesentlich mit zunehmender Temperatur abnimmt (Die Adsorptionskapazität von Kieselgel nimmt mit steigender Temperatur stärker ab)

— die Adsorption von $H_2O$ am Kieselgel mit der Bettiefe exponentiell abnimmt (Bei der Adsorption am Molekularsieb wird die volle maximale Kapazität ausgenutzt und das adsorbierte Wasser bewegt sich als Front durch das Filterbett)

— die Adsorptionskapazität der Molekularsiebe bei konstanter Temperatur weitgehend unabhängig von der relativen Luftfeuchte ist (Bei Kieselgel nimmt die Kapazität mit sinkender Luftfeuchte $\emptyset_2 < 40\%$ stark ab)

— das Adsorptionsprofil des Molekularsiebes unabhängig vom Volumenstrom innerhalb des gemessenen Intervalles ist (Bei Kieselgel wirkt sich die Erhöhung des Volumenstroms durch einen stärkeren Durchbruch des Wassers auf die nachfolgenden Filterelemente aus)

Die Adsorptionskapazität und Trocknungsintensität von Kieselgel ist demnach stark von Schwankungen der Temperatur, der relativen Luftfeuchte und dem Volumenstrom der Luft abhängig.

Für einen Luftfeuchtesammler besser geeignet sind die stäbchenförmigen Molekularsiebe z. B. der Fa. Union Carbide, da die Trocknungskapazität im interessierenden Temperaturbereich T < 50 °C weitgehend konstant etwa 20 % beträgt und der Restwassergehalt der getrockneten Luft minimal ist. Der Quencheffekt im Meßgut ist vernachlässigbar und die Halbwertszeit des Isotopenaustausches liegt unter 5 Minuten. Die Stäbchenform ermöglicht eine gute Handhabung und wegen der hohen Schüttdichte von ca. 75 g · 100 ml$^{-1}$ und der großen inneren Oberfläche von ca. 800-1100 m$^2$ · g$^{-1}$ eignet sich diese Form der Molekularsiebe zur Lufttrocknung in kleindimensionierten Trockenmittelpatronen am besten.

Der Aufbau einer Sammelstelle zur Messung der wassergebundenen $^3$H-Aktivität in der Fortluft kerntechnischer Anlagen ist im folgenden Beispiel II näher beschrieben.

Zur Herstellung einer repräsentativen Sammelprobe wird z. B. aus der Kaminfortluft ein konstanter Teilstrom entnommen und über ein Aerosolfilter, das Trockenmittel, einen Durchflußmesser und über eine Pumpe geleitet. Die Luftfeuchte wird im Trockenmittel praktisch vollständig adsorbiert. Nach der Sammlung wird das Trockenmittel zu tritiumfreiem Wasser gegeben und nach der Austauschzeit die Tritiumaktivitätskonzentration des Wassers mit Hilfe der Flüssigszintillationsmeßtechnik gemessen. Als Trockenmittel werden vorteilhaft die stäbchenförmigen Molekularsiebe « Union Carbide » mit den Porendurchmessern 3 Å, 4 Å, 5 Å, 8 Å oder 10 Å benutzt.

Koadsorptionsprobleme lassen sich durch die Wahl einer Molekularsiebtype mit einem kleinen kritischen Porendurchmesser lösen. So unterdrückt der Typ 3 Å die Adsorption größerer Moleküle an der inneren Oberfläche und ist zur selektiven Wasseradsorption besonders geeignet. Ein weiterer Faktor, der die Koadsorption unterdrückt, ist die hohe spezifische Adsorptionskraft der Molekularsiebe für Wasser.

Eine Einteilung solcher Molekularsiebe nach der Siebwirkung ist in der folgenden Tabelle II dargestellt :

| Typ | Adsorbierbare Moleküle |
|---|---|
| Molekularsieb 3A | He, Ne, Ar, CO, $NH_3$, $H_2$, $O_2$, $N_2$, $H_2O$ |
| Molekularsieb 4A | Kr, Xe, $CH_4$, $C_2H_6$, $C_2H_2$, $CH_3OH$, $CH_3CN$, $CH_3Cl$, $CH_3NH_2$, $C_2H_5OH$, $CO_2$, $H_2S$, $SO_2$, $CS_2$ |
| Molekularsieb 5A | $n-C_4H_{10}$ bis $C_{18}H_{38}$, $B_2H_6$, $C_2H_5Cl$, $C_2H_5Br$, $CH_2Br_2$, $CHF_2Cl$, $CHF_3$, $(CH_3)_2NH$, $CH_3J$, $CF_4$, $C_2F_6$, Cyclopropan, Freon-12 |

# 0 119 512

Tabelle (Fortsetzung)

| Typ | Adsorbierbare Moleküle |
|---|---|
| Molekularsieb 10X | $SF_6$, $CHCl_3$, $CHBr_3$, $CHJ_3$, $i-C_4H_{10}$ bis $i-C_{14}H_{30}$, $C_6H_6$, Cyclohexan, Thiophen, Furan, Pyridin, Dioxan, Naphthalin, $B_{10}H_{14}$, $(CH_3)_2CO$, $C_6H_5CH_3$, $(CH_3)_3N$, $(C_2H_5)_2O$, Freon-112 |
| Molekularsieb 13X | 1,3,5-Triäthylbenzol<br>1,2,3,4,5,6,7,8,13,14,15,16 Dekahydrochrysen |

Eine für den routinemäßigen Einsatz handhabbare Trockenmittelmenge zur Luftfeuchtesammlung ist 150 g Molekularsieb.

Es gilt:

$$K = \frac{G_{AD}}{G_{TRM}} \cdot 100 \% = 20 \%$$

Hierin bedeuten:

K = Kapazität des Trockenmittels in %

$G_{AD}$ = Adsorbierte Wassermenge in Gramm

$G_{TRM}$ = Trockenmittelmenge = 150 g

Das Molekularsieb soll zu 75 % seiner Gleichgewichtskapazität beladen werden, da die nutzbare dynamische Kapazität wegen des Restwassergehaltes und den Alterungseffekten etwas niedriger liegt als die Gleichgewichtskapazität. Durch die freibleibende Kapazität wird ein Wasserdurchbruch verhindert und eine hohe Trocknungsintensität erreicht.

Ein Mengenverhältnis von 250 g Wasser zu 150 g Trockenmittel ist für die Routinemessung noch praktikabel. Das gekühlte Wasser T 20 °C befindet sich in einem 500-ml-Polypropylen-Erlenmeyerkolben, der nach dem Einfüllen des Trockenmittels dicht verschlossen werden kann. Die Höhe der dabei freiwerdenden Reaktionsenergie hängt von der vom Trockenmittel vorher adsorbierten Luftfeuchtemenge ab. Sind 150 g Molekularsieb mit 10 g Luftfeuchte beladen, so ist maximal mit einer freiwerdenden Energie von etwa 84 kJ zu rechnen, die zu einer maximalen Temperaturerhöhung des Wassers um 70 bis 80 °C führt. Nach einigen Stunden kann an der Wasseroberfläche das Meßgut abpipettiert werden. Falls eine schnellere Probenvorbereitung notwendig ist, kann die Reinigung des Wassers durch Destillation oder Dekantieren und Filtration erfolgen. Das gebrauchte Molekularsieb wird verworfen. Es soll gelten:

$$\frac{G_{TRM}}{G_W} < 0,6$$

Hierin bedeuten:

$G_{TRM}$ = Menge des eingesetzten Trockenmittels in Gramm

$G_W$ = Menge des Wassers für den Isotopenaustausch in Gramm

Die Nachweisgrenze N der Flüssigszintillationsmessung für Tritium bei einer Meßzeit von 10 Minuten und einem Szintillatorcocktail auf Dioxanbasis beträgt etwa 0,15 $Bq \cdot g^{-1}$ Wasser. Nimmt man einen wöchentlichen Volumendurchsatz $V_B$ von 2 $m^3$, eine adsorbierte Luftfeuchtemenge $G_{AD}$ 10 g und eine Verdünnung in 250 g Wasser an, so ergibt sich die Nachweisgrenze wie folgt:

$$NWG = \frac{[G_{AD} + G_{H_2O}] \cdot N}{V_B} = 19,2 \, Bq.m^{-3}$$

Durch Erhöhung der Meßzeit auf 200 Minuten und durch Verwendung von Insta-Gel als Szintillator verbessert sich die Nachweisgrenze auf etwa 1 $Bq \cdot m^{-3}$. Die geforderte Nachweisgrenze für Tritium beträgt nach den Regeln 1 503.1 des KTA 3,7 $\cdot$ $10^2$ $Bq \cdot m^{-3}$.

**Patentansprüche**

1. Verfahren zur Bestimmung der $^3$H-Konzentration von Luftfeuchte, bei dem die Luftfeuchte in einem Trockenmittel adsorbiert und die Tritiumaktivitätskonzentration gemessen wird, dadurch gekennzeichnet, daß die Luftfeuchte im Trockenmittel vollständig adsorbiert wird, daß das Trockenmittel danach

6

zu tritiumfreiem Wasser gegeben wird, wobei ein $^3$H/H$^1$-Isotopenaustausch erfolgt, und daß von einer Probe des derart gewonnenen Wassers die $^3$H-Konzentrationsmessung erfolgt.

2. Verfahren nach Anspruch 1, gekennzeichnet durch die Verwendung von Molekularsieben mit Porendurchmessern von 3 Å bis 10 Å oder Kieselgel als Trockenmittel.

3. Anwendung des Verfahrens nach Anspruch 1 oder 2 auf die Überwachung der Fortluft kerntechnischer Anlagen oder der Umgebungsluft.

4. Verfahren nach Anspruch 1 oder 2, dadurch gekennzeichnet, daß die Molekularsiebe Stäbchenform aufweisen.

## Claims

1. Method of determining the $^3$H concentration of air moisture, wherein the air moisture is adsorbed in a drying agent, and the concentration of tritium activity is measured, characterised in that the air moisture is completely adsorbed in the drying agent, the drying agent is then added to tritium-free water, whereby a $^3$H/H$^1$ isotope exchange is effected, and the $^3$H concentration is measured utilising a sample of the water thus obtained.

2. Method according to claim 1, characterised by the use of molecular sieves with pore diameters of from 3 Å to 10 Å or silica gel as the drying agent.

3. Use of the method according to claim 1 or 2 for monitoring the exhaust air of nuclear plants or the ambient air.

4. Method according to claim 1 or 2, characterised in that the molecular sieves are in the form of small rods.

## Revendications

1. Procédé de détermination de la concentration en Tritium de l'humidité de l'air, dans lequel l'humidité de l'air est adsorbée dans un agent de dessiccation et la concentration d'activité du Tritium est mesurée, caractérisé en ce que l'humidité de l'atmosphère est complètement adsorbée dans l'agent de dessiccation, que l'agent de dessiccation est ajouté ensuite à de l'eau dépourvue de Tritium, de façon à ce qu'un échange isotopique $^3$H/H$^1$ s'effectue et que la mesure de la concentration de Tritium s'effectue à partir d'un échantillon d'eau obtenu de cette façon.

2. Procédé selon la revendication 1, caractérisé par l'utilisation de tamis moléculaires ayant un diamètre de pores de 3 Å à 10 Å ou de gel de silice comme agent de dessiccation.

3. Application du procédé selon la revendication 1 ou 2 à la surveillance de l'air d'échappement des installations techniques nucléaires ou de l'air de l'environnement.

4. Procédé selon la revendication 1 ou 2, caractérisé en ce que le tamis moléculaire montre une forme de bâtonnet.

Fig. 1

Fig. 2

Fig. 3